# FASCICULE DE BREVET EUROPEEN

(11) **EP 4 444 673 B1**
(45) Date de publication et mention de la délivrance du brevet: **26.08.2026**
(21) Numéro de dépôt: 22835095.5
(22) Date de dépôt: 05.12.2022
(51) Int. Cl.: F16D 69/02, G01N 27/90

(54) **DISPOSITIF DE MESURE DE L'OXYDATION D'UN DISQUE DE FREIN PAR MESURE DE DIAMAGNÉTISME**
VORRICHTUNG ZUR MESSUNG DER OXIDATION EINER BREMSSCHEIBE MITTELS DIAMAGNETISMUSMESSUNG
DEVICE FOR MEASURING THE OXIDATION OF A BRAKE DISC BY MEANS OF DIAMAGNETISM MEASUREMENT

(30) Priorité: 07.12.2021 FR 2113088
(43) Date de publication de la demande: 16.10.2024
(73) Titulaire: Safran Electronics & Defense, 75015 Paris (FR); Safran Landing Systems, 78140 Vélizy-Villacoublay (FR)
(72) Inventeur: LIPARI, Nicolas, 77550 MOISSY CRAMAYEL (FR); LAPÔTRE, Blaise, 77550 MOISSY CRAMAYEL (FR); SIRE, Clément, 77550 MOISSY CRAMAYEL (FR); FANTON, Nicolas, 77550 MOISSY CRAMAYEL (FR); COUTURIER, Emmanuel, 77550 MOISSY CRAMAYEL (FR)
(74) Mandataire: Casalonga
(86) Numéro de dépôt international: PCT/FR2022/052243
(87) Numéro de publication internationale: WO 2023/105149

(56) Documents cités:
- DE-A1- 102008 051 802
- DE-A1- 102020 114 433
- US-A1- 2004 124 087
- US-A1- 2019 003 542
- US-A1- 2021 255 049

## Description

### Domaine technique

La présente invention concerne les systèmes de freins pour aéronefs, et en particulier les disques de frein en matériau composite carbone-carbone.

La présente invention concerne plus particulièrement la mesure de l'oxydation de ces disques de frein en matériau composite carbone-carbone.

La présente invention peut néanmoins être appliquée à toute mesure d'oxydation d'un matériau en composite carbone-carbone.

### Techniques antérieures

Les disques de frein d'aéronefs sont régulièrement soumis à des températures élevées, par exemple à plus de 700° C. Ces fortes températures favorisent l'oxydation des matériaux composites carbone-carbone, souvent utilisés dans la composition des disques de frein. En particulier, l'oxydation peut être plus ou moins importante selon les températures atteintes, ou selon les cycles d'utilisation des freins et leur refroidissement, ou encore selon l'environnement des disques de frein, en particulier l'humidité ou la présence de produits corrosifs.

L'oxydation d'un disque de frein provoque une usure plus rapide des disques de frein et donc nuit aux bonnes performances de freinage de l'aéronef et à la durée de vie des disques. Il est donc important de pouvoir surveiller l'état d'oxydation des disques de frein afin de pouvoir effectuer une maintenance et/ou un remplacement prédictif des disques de frein.

Une solution de mesure de l'oxydation consiste en un contrôle visuel de l'usure des disques de frein. Cependant, la quantification du niveau d'oxydation est aléatoire et deux disques de frein différents ne montreront pas nécessairement les mêmes marques d'usure pour un même niveau d'oxydation.

Une autre solution consiste à mesurer la circonférence d'un disque de frein, l'oxydation provoquant la diminution de la circonférence des disques de frein, l'usure due au freinage provoquant la diminution de l'épaisseur des disques de frein.

Cependant, la mesure de la circonférence d'un disque de frein ne permet pas de surveiller l'évolution de l'oxydation d'un disque de frein. En effet, la diminution de la circonférence ne devient mesurable et visible qu'à partir du moment où le disque de frein est déjà trop oxydé et doit être remplacé. Cette solution ne permet donc pas une maintenance prédictive des disques de frein.

De plus, cette solution nécessite un accès à un disque de frein, impliquant de devoir retirer la jante et le pneumatique après refroidissement du système de freinage.

Le document US 2004/124087 A1 concerne un procédé de détection de l'oxydation de fibres ou de faisceaux de fibres contenant du carbone dans des composites pour des disques de freins. Le procédé comprend l'application d'un champ magnétique alternatif au composite par l'intermédiaire d'une première bobine, le courant de Foucault généré à l'intérieur des fibres provoquant un signal qui est nettement différent pour des fibres oxydées et des fibres non oxydées.

Le document DE 10 2020 114433 A1 concerne un capteur non-destructif pour la détection de carbone mettant en œuvre une telle mesure. Ce document concerne en outre un procédé et dispositif de détermination non destructive d'une propriété d'un objet en matériau carbone. Le dispositif de ce document comprend un capteur de proximité comprenant deux paires de bobines permettant d'obtenir un signal de sortie différentiel.

### Exposé de l'invention

La présente invention a donc pour but de pallier les inconvénients précités et de fournir un dispositif de mesure non destructive de l'oxydation permettant à terme de rechercher les causes accélérant l'oxydation.

La présente invention a pour objet un dispositif de mesure de l'oxydation d'un élément comprenant un composite carbone-carbone, le dispositif comprenant un moyen de mesure du diamagnétisme de l'élément et un moyen de conversion de la mesure de diamagnétisme en mesure d'oxydation selon la revendication indépendante 1.

Ainsi, la mesure d'oxydation est reproductible et fiable, et utilise la propriété diamagnétique du composite carbone-carbone.

Dans un mode de réalisation de l'invention, l'élément est un disque de frein.

Avantageusement, le moyen de mesure du diamagnétisme comprend une première bobine à placer à proximité de l'élément et une alimentation alimentant la première bobine afin de générer un champ magnétique.

Avantageusement, le moyen de mesure du diamagnétisme comprend une seconde bobine à placer à proximité de l'élément et comprenant une première et une seconde borne, et un moyen de mesure et d'intégration de la tension entre la première borne de la seconde bobine et une borne de référence de manière à mesurer les variations de champ magnétique induites par l'élément.

Avantageusement, le moyen de mesure du diamagnétisme comprend un guide comprenant un matériau ferromagnétique, le guide guidant le champ magnétique généré par la première bobine entre ladite première bobine et l'élément, ainsi qu'entre l'élément et la seconde bobine.

La première et la seconde bobines sont coaxiales.

Dans un mode particulier de réalisation, la borne de référence est la seconde borne de la seconde bobine.

Selon l'invention, le moyen de mesure du diamagnétisme comprend en outre une troisième bobine et une quatrième bobine destinées à être éloignées de l'élément, chacune des bobines comprenant deux bornes, la seconde borne de la seconde bobine étant reliée à la première borne de la troisième bobine, la seconde borne de la troisième bobine étant la borne de référence, l'alimentation étant reliée d'une part à la première borne de la première bobine et d'autre part à la première borne de la quatrième bobine, les secondes bornes de la première et de la quatrième bobines étant reliées.

Dans un exemple non couvert par la présente invention, le moyen de mesure du diamagnétisme comprend un aimant et/ou un électroaimant et une balance, l'élément étant destiné à être placé sur la balance au-dessus dudit aimant et/ou électroaimant de sorte que la masse mesurée par la balance est corrélée au diamagnétisme de l'élément en comparant le poids d'un élément mesuré avec son poids lorsqu'il est soumis à un champ magnétique.

Avantageusement, le moyen de conversion de la mesure de diamagnétisme en mesure d'oxydation comprend une empreinte empirique de conversion et/ou une loi théorique ou empirique établissant une équivalence entre le diamagnétisme de l'élément et l'oxydation de l'élément.

La présente invention a également pour objet, selon la revendication indépendante 4, un procédé de mesure de l'oxydation d'un élément comprenant un composite carbone-carbone avec un dispositif tel que défini précédemment, le procédé comprenant les étapes suivantes :
- calibration du dispositif avec un élément non oxydé et un élément très oxydé ;
- approche du dispositif vers l'élément ;
- activation du moyen de mesure du diamagnétisme ; et
- conversion de la mesure de diamagnétisme en mesure d'oxydation.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre une coupe schématique d'un dispositif de mesure de l'oxydation d'un élément dans un exemple non couvert par le présent jeu de revendications ;
[Fig 2] illustre une variante de l'exemple illustré à la figure 1 non couverte par le présent jeu de revendications ;
[Fig 3] est un graphique illustrant un exemple d'empreinte empirique permettant de relier une mesure de diamagnétisme à une mesure d'oxydation ;
[Fig 4] illustre une coupe schématique d'un dispositif de mesure de l'oxydation d'un élément dans une variante de l'exemple illustré à la figure 1 non couverte par le présent jeu de revendications;
[Fig 5] illustre une coupe schématique d'un dispositif de mesure de l'oxydation d'un élément selon l'invention;
[Fig 6] illustre une coupe schématique d'un dispositif de mesure de l'oxydation d'un élément dans un exemple non couvert par le présent jeu de revendications;
[Fig 7] illustre une coupe schématique d'un dispositif de mesure de l'oxydation d'un élément dans un exemple non couvert par le présent jeu de revendications;
[Fig 8] illustre une coupe schématique d'un dispositif de mesure de l'oxydation d'un élément dans un exemple non couvert par le présent jeu de revendications; et
[Fig 9] illustre un procédé de mesure de l'oxydation d'un élément selon l'invention.

### Exposé détaillé d'au moins un mode de réalisation

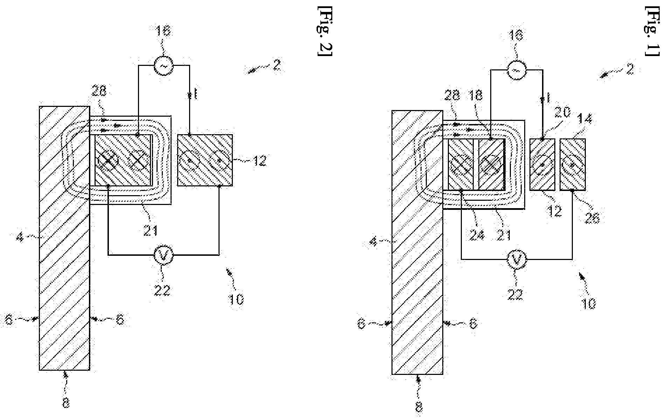

On a représenté sur la figure 1 une vue schématique d'un dispositif 2 de mesure de l'oxydation d'un élément 4 dans un premier exemple.

Dans chaque mode de réalisation ou exemple représenté, l'élément 4 est un disque de frein d'aéronef comprenant deux faces circulaires 6 parallèles et une tranche 8 cylindrique. L'élément 4 comprend un composite carbone-carbone comprenant du pyrocarbone, aussi appelé carbone pyrolitique, dont la matrice se désagrège en raison de l'oxydation. Une propriété particulière du pyrocarbone est son fort diamagnétisme, dont il a été observé qu'il était plus important avec une grande quantité de pyrocarbone, et donc moins important lorsque le pyrocarbone est oxydé.

Dans le premier exemple illustré sur la figure 1, le dispositif 2 comprend un moyen 10 de mesure du diamagnétisme de l'élément 4 et un moyen de conversion de la mesure de diamagnétisme en mesure d'oxydation (non représenté).

Ainsi, le moyen 10 de mesure du diamagnétisme permet de déterminer indirectement la quantité de composite carbone-carbone en mesurant le diamagnétisme dans l'élément 4. Le moyen de conversion de la mesure de diamagnétisme en mesure d'oxydation permet ensuite de convertir la mesure de diamagnétisme en mesure d'oxydation. Par exemple, le moyen de conversion comprend une table ou une empreinte de courbe, par exemple obtenue de manière empirique, sur laquelle sont répertoriées des équivalences entre diamagnétisme et oxydation pour une quantité donnée de composite carbone-carbone. En variante, ou en complément de la table ou de l'empreinte, une loi théorique ou empirique peut être utilisée pour établir l'équivalence entre diamagnétisme et oxydation de l'élément. Le moyen 10 de mesure du diamagnétisme comprend en particulier une première bobine 12 et une seconde bobine 14, toutes les deux destinées à être placées à proximité de l'élément 4 afin d'effectuer une mesure de diamagnétisme.

Le moyen 10 de mesure du diamagnétisme comprend en outre une alimentation 16, par exemple une alimentation sinusoïdale, alimentant la première bobine 12 à partir d'une intensité I. Dans l'exemple illustré sur la figure 1, l'alimentation sinusoïdale 16 est reliée d'une part à une première borne 18 de la première bobine 12, et d'autre part à une seconde borne 20 de la première bobine 12. Cette architecture permet de générer un champ magnétique 21 à partir de la première bobine 12. Le moyen 10 de mesure du diamagnétisme comprend également un moyen 22 de mesure et d'intégration de la tension entre la première borne 24 de la seconde bobine 14 et une borne de référence, ici la borne de référence étant la seconde borne 26 de la seconde bobine 14.

Lorsque la première bobine 12 est suffisamment proche de l'élément 4, le champ magnétique 21 généré passe dans l'élément 4 qui déforme l'allure du champ magnétique 21. La seconde bobine 14 est destinée à être placée de sorte que le champ magnétique 21 passe à l'intérieur de la seconde bobine 14. La mesure de la tension aux bornes de la seconde bobine 14, puis l'intégration de cette mesure permet de retrouver les différences entre le champ magnétique émis par la première bobine 12 et le champ magnétique reçu par la seconde bobine 14.

En particulier, moins l'élément 4 est oxydé, plus le diamagnétisme sera fort et s'opposera au champ magnétique 21. De plus, la forme du champ magnétique 21 peut également être modifiée, par exemple sinusoïdale à la sortie de la première bobine 12 et déformée à la mesure de la seconde bobine 14.

Optionnellement, le moyen 10 de mesure du diamagnétisme comprend un guide 28 permettant de guider le champ magnétique 21 directement entre la première bobine 12 et l'élément 4, ainsi qu'entre l'élément 4 et la seconde bobine 14. Le guide 28 est par exemple réalisé en matériau ferromagnétique. Il comprend par exemple du fer et/ou du nickel.

Dans l'exemple illustré, la première bobine 12 est coaxiale à la seconde bobine 14. Plus particulièrement, la première bobine 12 est située à l'intérieur de la seconde bobine 14. Cette architecture permet au champ magnétique 21 d'être mesuré là où il est émis. En variante, les deux bobines 12 et 14 peuvent être mêlées l'une dans l'autre, ou bien avoir une tout autre configuration.

Sur la figure 1, le dispositif 2 illustré permet de mesurer le diamagnétisme de l'élément 4 en faisant entrer et sortir le champ magnétique 21 au niveau d'une seule et même face circulaire 6 de l'élément 4.

On a représenté sur la figure 2 une variante de l'exemple illustré sur la figure 1, la première bobine 12 et la seconde bobine 14 étant confondues en une seule et même première bobine 12, la mesure de diamagnétisme étant effectuée par la mesure du décalage temporel ou le décalage de phase entre le courant injecté dans la première bobine 12 et la tension aux bornes de cette même première bobine 12.

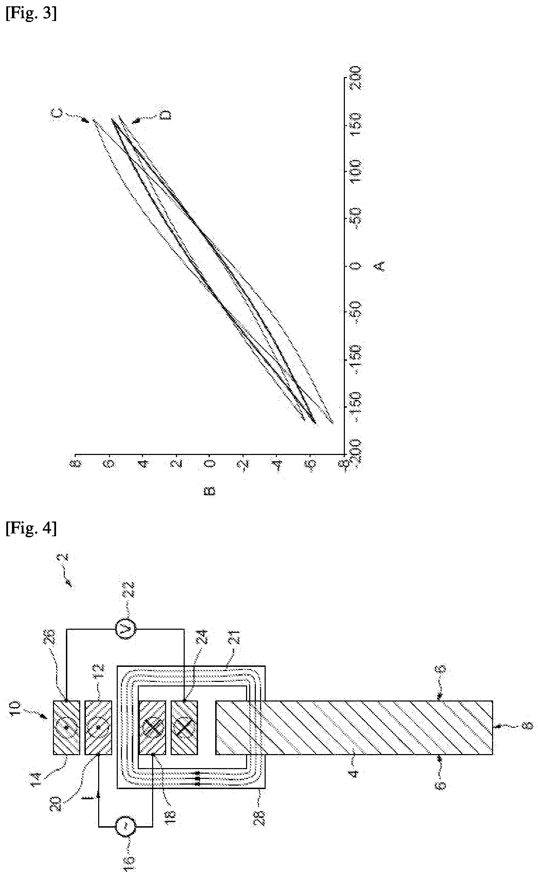

On a représenté sur la figure 3 un graphique illustrant un exemple d'empreinte empirique permettant de relier la mesure de diamagnétisme à la mesure d'oxydation. Le graphique représenté comprend un axe des abscisses A correspondant à l'intensité introduite dans la première bobine 12 en unités arbitraires. Le graphique comprend en outre un axe des ordonnées B correspondant à la tension intégrée aux bornes de la seconde bobine 14 en unités arbitraires.

La courbe C correspond à un élément 4 oxydé tandis que la courbe D correspond à un élément 4 non oxydé.

Le profil de ces courbes permet ainsi de mesurer l'oxydation d'un élément 4 par comparaison avec des courbes de références, par exemple les courbes C et D.

On a représenté sur la figure 4 une variante de l'exemple de la figure 1 où le champ magnétique 21 entre et sort par deux faces circulaires 6 différentes.

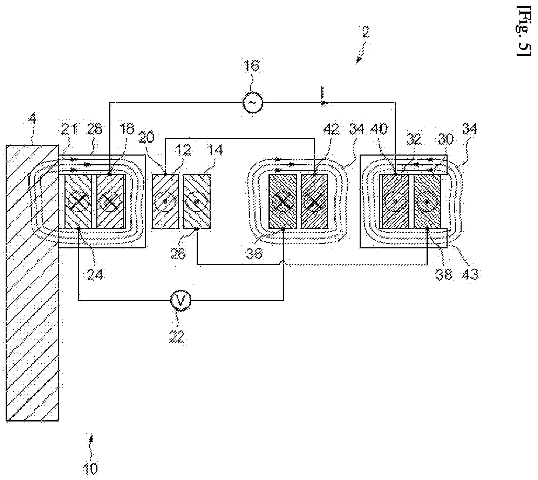

On a représenté sur la figure 5 une vue schématique d'un dispositif 2 de mesure de l'oxydation d'un élément 4 selon un mode de réalisation de l'invention.

Dans ce mode de réalisation, seuls les branchements de l'alimentation 16 diffèrent du premier exemple.

Dans ce mode de réalisation, le moyen 10 de mesure du diamagnétisme comprend en outre une troisième bobine 30 et une quatrième bobine 32, toutes deux destinées à être éloignées de l'élément 4 afin de générer un champ magnétique 34 dans l'air.

Chacune des bobines comprend deux bornes. Dans ce mode de réalisation, les branchements sont tels que le moyen 22 de mesure et d'intégration de la tension relie d'une part la première borne 24 de la seconde bobine 14 et une borne de référence, ici la borne de référence étant la seconde borne 36 de la troisième bobine 30.

De plus, la seconde borne 26 de la seconde bobine 14 est reliée à la première borne 38 de la troisième bobine 30. L'alimentation 16 est reliée d'une part à la première borne 18 de la première bobine 12 et d'autre part à la première borne 40 de la quatrième bobine 32, les secondes bornes 20 et 42 de la première et de la quatrième bobines 12 et 32 étant reliées entre elles.

Optionnellement, le moyen 10 de mesure du diamagnétisme comprend un guide 43 permettant de guider le champ magnétique 34 directement entre la quatrième bobine 32 et l'air, ainsi qu'entre l'air et la troisième bobine 30. Le guide 43 est par exemple réalisé en matériau ferromagnétique. Il comprend par exemple du fer et/ou du nickel. Il est similaire au guide 28.

Ce mode de réalisation est construit sous la forme d'une construction en miroir. Cette construction permet de réaliser ce mode de réalisation en doublant le dispositif de la figure 1 afin d'effectuer une mesure dans l'air d'une part et dans l'élément 4 d'autre part.

Ce mode de réalisation permet en particulier de réaliser une mesure différentielle entre l'élément 4 et l'air et ainsi d'avoir une mesure plus précise.

Les exemples des figures 1 et 4, et le mode de réalisation de la figure 5 sont particulièrement avantageux puisqu'ils permettent d'approcher le dispositif 2 au niveau de l'élément 4 et ainsi de ne pas avoir à démonter le disque de frein en dehors de l'aéronef. De plus, la mesure peut être effectuée lorsque l'élément 4 est froid ou bien également lorsque sa température est élevée.

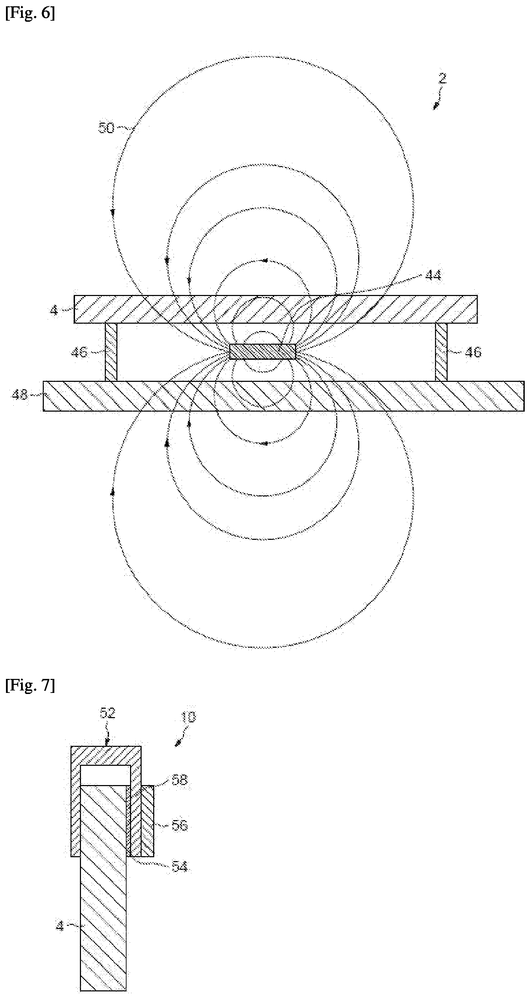

On a représenté sur la figure 6 une vue schématique d'un dispositif 2 de mesure de l'oxydation d'un élément 4 selon un deuxième exemple.

Dans cet exemple, le moyen de conversion de la mesure de diamagnétisme en mesure d'oxydation est le même que pour les exemples et le mode de réalisation précédents. Cependant, le moyen 10 de mesure du diamagnétisme comprend un aimant 44 et/ou un électroaimant, par exemple une bobine, ainsi qu'une balance 46 posée sur un support 48. L'élément 4 est destiné à être posé sur la balance 46 à proximité de l'aimant 44 et/ou de l'électroaimant, par exemple au-dessus ou en dessous et sans contact.

Sur la figure 5, l'élément 4 est placé au-dessus d'un aimant 44, de sorte que le diamagnétisme du composite carbone-carbone de l'élément 4 s'oppose au champ magnétique 50 exercé par l'aimant 44, faisant apparaitre l'élément 4 comme plus léger sur la balance 46 que sa masse réelle. En particulier, plus l'élément 4 apparait lourd sur la balance, moins l'élément est diamagnétique. Une table d'équivalence et/ou une empreinte de courbe et/ou une loi physique peuvent être utilisées afin de déterminer une équivalence entre la masse mesurée et le diamagnétisme de l'élément 4. Le moyen de conversion permet ensuite de convertir la mesure de diamagnétisme en mesure d'oxydation, l'élément 4 étant donc oxydé s'il apparait lourd par rapport à un élément non oxydé.

On a représenté sur la figure 7 une vue schématique d'un dispositif 2 de mesure de l'oxydation d'un élément 4 selon un troisième exemple.

Dans cet exemple, le moyen 10 de mesure du diamagnétisme comprend un système de pinçage 52, une jauge de contrainte 54, et une bobine 56 solidaire du système de pinçage 52, par exemple positionnée à l'extérieur d'une pince 58 du système de pinçage 52. La jauge de contrainte 54 est positionnée en regard de la bobine 56, par exemple à l'intérieur de la pince 58. La pince 58 est destinée à venir pincer l'élément 4 en plaquant la jauge de contrainte 54 contre l'élément 4. En alimentant la bobine 56, on crée un champ magnétique auquel le diamagnétisme de l'élément 4 s'oppose, générant une force au niveau de la jauge de contrainte 54. Cette force peut alors être traduite en mesure de diamagnétisme, par exemple empiriquement.

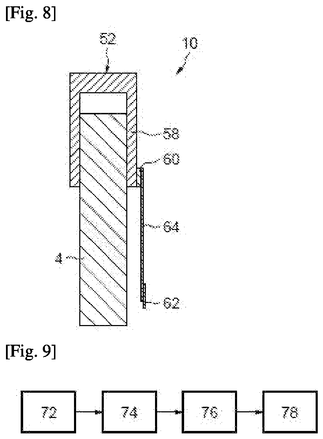

On a représenté sur la figure 8 une vue schématique d'un dispositif 2 de mesure de l'oxydation d'un élément 4 selon un quatrième exemple dont le principe est analogue aux deux précédents.

Dans cet exemple, le moyen 10 de mesure du diamagnétisme comprend un système de pinçage 52 et une jauge de contrainte 60, par exemple positionnée contre la surface extérieure d'une pince 58 du système de pinçage. Le moyen 10 de mesure du diamagnétisme comprend en outre une bobine 62 et une lame souple 64, la lame étant reliée à la jauge de contrainte 60 et la bobine 62 étant positionnée sur une extrémité de la lame souple 64.

La pince 58 est destinée à venir pincer l'élément 4 en plaçant la lame souple 64 et la bobine 62 à proximité de l'élément 4. En alimentant la bobine 62, on crée un champ magnétique auquel le diamagnétisme de l'élément 4 s'oppose, repoussant ainsi la bobine 62 et déformant la lame souple 64, générant ainsi une force au niveau de la jauge de contrainte 60. Cette force peut alors être traduite en mesure de diamagnétisme, par exemple empiriquement.

Les exemples des figures 7 et 8 sont particulièrement avantageux puisqu'ils permettent d'approcher le dispositif 2 au niveau de l'élément 4 et ainsi de ne pas avoir à démonter le disque de frein en dehors de l'aéronef.

On a représenté sur la figure 9 les différentes étapes du procédé de mesure de l'oxydation d'un élément 4 comprenant un composite carbone-carbone. Ce procédé est mis en œuvre à l'aide d'un dispositif 2 selon l'un des exemples ou le mode de réalisation précédents.

En premier lieu, on effectue une étape 72 de calibration du dispositif 2 avec deux éléments 4 de référence, par exemple un élément peu ou pas oxydé d'une part, par exemple un disque de frein neuf, et un élément très oxydé d'autre part, par exemple un disque de frein usagé de sorte qu'il faille le changer. Ces éléments de référence permettent de créer des valeurs seuils de fonctionnement et ainsi de connaitre si la mesure d'oxydation est importante ou non à la fin du procédé.

Puis, on réitère le procédé sur l'élément 4 à mesurer.

De manière plus détaillée, on approche dans une deuxième étape 74 le dispositif 2 de l'élément 4.

On active le moyen 10 de mesure du diamagnétisme dans une troisième étape 76 et on convertit finalement la mesure de diamagnétisme en mesure d'oxydation dans une quatrième étape 78.

## Revendications

1. Dispositif de mesure de l'oxydation d'un élément (4) comprenant un composite carbone-carbone, comprenant un moyen (10) de mesure du diamagnétisme de l'élément (4) et un moyen de conversion de la mesure de diamagnétisme en mesure d'oxydation, le moyen (10) de mesure du diamagnétisme comprenant une première bobine (12 ; 56 ; 62) à placer à proximité de l'élément (4), une alimentation (16) alimentant la première bobine (12) afin de générer un champ magnétique (21), une seconde bobine (14) à placer à proximité de l'élément (4) et comprenant une première et une seconde borne (24 ; 26), un moyen (22) de mesure de la tension entre la première borne (24) de la seconde bobine (14) et une borne de référence (26 ; 36) de manière à mesurer les variations de champ magnétique (21) induites par l'élément (4),
le dispositif de mesure étant **caractérisé en ce que** le moyen (10) de mesure du diamagnétisme comprend en outre une troisième bobine (30) et une quatrième bobine (32) destinées à être éloignées de l'élément (4), chacune des bobines comprenant deux bornes, la seconde borne (26) de la seconde bobine (14) étant reliée à la première borne (38) de la troisième bobine (30), la seconde borne (36) de la troisième bobine (30) étant la borne de référence, l'alimentation (16) étant reliée d'une part à la première borne (18) de la première bobine (12) et d'autre part à la première borne (40) de la quatrième bobine (32), les secondes bornes (20 ; 42) de la première et de la quatrième bobines (12 ; 32) étant reliées, la première et la seconde bobines (12 ; 14) étant coaxiales, la première bobine (12) étant située à l'intérieur de la seconde bobine (14), la troisième et la quatrième bobines (30 ; 32) étant coaxiales, la quatrième bobine (32) étant située à l'intérieur de la troisième bobine (30).

2. Dispositif selon la revendication 1, dans lequel le moyen (10) de mesure du diamagnétisme comprend un guide (28) comprenant un matériau ferromagnétique, le guide (28) guidant le champ magnétique (21) généré par la première bobine (12) entre ladite première bobine (12) et l'élément (4).

3. Dispositif selon l'une des revendications 1 et 2, dans lequel le moyen de conversion de la mesure de diamagnétisme en mesure d'oxydation comprend une empreinte empirique de conversion et/ou une loi théorique ou empirique établissant une équivalence entre le diamagnétisme de l'élément (4) et l'oxydation de l'élément (4).

4. Procédé de mesure de l'oxydation d'un élément (4) comprenant un composite carbone-carbone avec un dispositif (2) selon l'une quelconque des revendications 1 à 3, **caractérisé en ce qu'**il comprend les étapes suivantes :
- calibration (étape 72) du dispositif (2) avec un élément (4) non oxydé et un élément très oxydé ;
- approche (étape 74) du dispositif (2) vers l'élément (4) ;
- activation (étape 76) du moyen (10) de mesure du diamagnétisme ; et
- conversion (étape 78) de la mesure de diamagnétisme en mesure d'oxydation.

## Patentansprüche

1. Vorrichtung zur Messung der Oxidation eines Elements (4), das einen Kohlenstoff-Kohlenstoff-Verbundwerkstoff umfasst, umfassend ein Mittel (10) zur Messung des Diamagnetismus des Elements (4) und ein Mittel zur Umwandlung der Diamagnetismusmessung in eine Oxidationsmessung, wobei das Mittel (10) zur Messung des Diamagnetismus eine erste Spule (12; 56; 62), die in der Nähe des Elements (4) zu platzieren ist, eine Stromversorgung (16), die die erste Spule (12) speist, um ein Magnetfeld (21) zu erzeugen, eine zweite Spule (14), die in der Nähe des Elements (4) zu platzieren ist, und eine erste und eine zweite Klemme (24; 26) sowie ein Mittel (22) zur Messung der Spannung zwischen der ersten Klemme (24) der zweiten Spule (14) und einer Referenzklemme (26; 36), um die vom Element (4) induzierten Schwankungen des Magnetfelds (21) zu messen, umfasst,
wobei die Messvorrichtung **dadurch gekennzeichnet ist, dass** das Mittel (10) zur Messung des Diamagnetismus ferner eine dritte Spule (30) und eine vierte Spule (32) umfasst, die vom Element (4) entfernt sein sollen, wobei jede der Spulen zwei Klemmen umfasst, wobei die zweite Klemme (26) der zweiten Spule (14) mit der ersten Klemme (38) der dritten Spule (30) verbunden ist, wobei die zweite Klemme (36) der dritten Spule (30) die Referenzklemme ist, wobei die Versorgung (16) einerseits mit der ersten Klemme (18) der ersten Spule (12) und andererseits mit der ersten Klemme (40) der vierten Spule (32) verbunden ist, wobei die zweiten Klemmen (20; 42) der ersten und der vierten Spule (12; 32) verbunden sind, wobei die erste und die zweite Spule (12; 14) koaxial sind, wobei sich die erste Spule (12) innerhalb der zweiten Spule (14) befindet, wobei die dritte und die vierte Spule (30; 32) koaxial sind, wobei sich die vierte Spule (32) innerhalb der dritten Spule (30) befindet.

2. Vorrichtung nach Anspruch 1, wobei das Mittel (10) zur Messung des Diamagnetismus eine Führung (28) umfasst, die ein ferromagnetisches Material umfasst, wobei die Führung (28) das von der ersten Spule (12) erzeugte Magnetfeld (21) zwischen der ersten Spule (12) und dem Element (4) leitet.

3. Vorrichtung nach einem der Ansprüche 1 und 2, wobei das Mittel zur Umwandlung der Diamagnetismusmessung in eine Oxidationsmessung eine empirische Umwandlungskurve und/oder ein theoretisches oder empirisches Gesetz umfasst, das eine Äquivalenz zwischen dem Diamagnetismus des Elements (4) und der Oxidation des Elements (4) herstellt.

4. Verfahren zur Messung der Oxidation eines Elements (4), das einen Kohlenstoff-Kohlenstoff-Verbundwerkstoff mit einer Vorrichtung (2) nach einem der Ansprüche 1 bis 3 umfasst, **dadurch gekennzeichnet, dass** es die folgenden Schritte umfasst:
- Kalibrieren (Schritt 72) der Vorrichtung (2) mit einem nicht oxidierten Element (4) und einem stark oxidierten Element;
- Annähern (Schritt 74) der Vorrichtung (2) an das Element (4);
- Aktivieren (Schritt 76) des Mittels (10) zur Messung des Diamagnetismus; und
- Umwandeln (Schritt 78) der Diamagnetismusmessung in eine Oxidationsmessung.

## Claims

1. Device for measuring the oxidation of an element (4) comprising a carbon-carbon composite, comprising a means (10) for measuring the diamagnetism of the element (4) and a means for converting the diamagnetism measurement into an oxidation measurement, the means (10) for measuring the diamagnetism comprising a first coil (12; 56; 62) to be placed near the element (4), a power supply (16) supplying the first coil (12) in order to generate a magnetic field (21), a second coil (14) to be placed near the element (4) and comprising a first and a second terminal (24; 26), a means (22) for measuring the voltage between the first terminal (24) of the second coil (14) and a reference terminal (26; 36) so as to measure the variations of magnetic field (21) induced by the element (4),
the measuring device being **characterised in that** the means (10) for measuring the magnetism further comprises a third coil (30) and a fourth coil (32) intended to be positioned away from the element (4), each of the coils comprising two terminals, the second terminal (26) of the second coil (14) being connected to the first terminal (38) of the third coil (30), the second terminal (36) of the third coil (30) being the reference terminal, the power supply (16) being connected on the one hand to the first terminal (18) of the first coil (12) and on the other hand to the first terminal (40) of the fourth coil (32), the second terminals (20; 42) of the first and fourth coils (12; 32) being connected, the first and second coils (12; 14) being coaxial, the first coil (12) being located inside the second coil (14), the third and fourth coils (30; 32) being coaxial, the fourth coil (32) being located inside the third coil (30).

2. Device according to Claim 1, wherein the means (10) for measuring the diamagnetism comprises a guide (28) comprising a ferromagnetic material, the guide (28) guiding the magnetic field (21) generated by the first coil (12) between said first coil (12) and the element (4).

3. Device according to one of Claims 1 or 2, wherein the means for converting the diamagnetism measurement into an oxidation measurement comprises an empirical conversion trace and/or a theoretical or empirical law establishing an equivalence between the diamagnetism of the element (4) and the oxidation of the element (4).

4. Method for measuring the oxidation of an element (4) comprising a carbon-carbon composite with a device (2) according to any one of Claims 1 to 3, **characterised in that** it comprises the following steps:
- calibrating (step 72) the device (2) with a non-oxidised element (4) and a highly oxidised element;
- moving (step 74) the device (2) towards the element (4);
- activating (step 76) the means (10) for measuring the diamagnetism; and
- converting (step 78) the diamagnetism measurement into an oxidation measurement.
